# EUROPEAN PATENT SPECIFICATION

(11) **EP 3 865 364 B1**
(45) Date of publication and mention of the grant of the patent: **26.04.2023**
(21) Application number: 21157344.9
(22) Date of filing: 16.02.2021
(51) Int. Cl.: B60W 30/18, B60K 6/48

(54) **VEHICLE WITH RAPID LAUNCH CONTROL**
FAHRZEUG MIT RENNSTARTSYSTEM
VÉHICULE AVEC SYSTÈME DE CONTRÔLE DU DÉMARRAGE RAPIDE

(30) Priority: 17.02.2020 IT 202000003098
(43) Date of publication of application: 18.08.2021
(73) Proprietor: Texa S.p.A., 31050 Monastier di Treviso (IT)
(72) Inventor: VIANELLO, Bruno, 31050 MONASTIER DI TREVISO (TV) (IT)
(74) Representative: Burchielli, Riccardo

(56) References cited:
- EP-A1- 2 514 950
- WO-A1-2014/048947
- US-A1- 2013 073 163
- US-A1- 2016 114 771

## Description

This invention relates to a vehicle, in particular a motor vehicle, including a combustion engine and an automatic transmission, which allows the vehicle to be started at a high number of rpm. As is well known, one type of hybrid car (hybrid-parallel) uses the internal combustion engine to transmit motion to the wheels of the vehicle in parallel with the motion transmitted by one or more electric motors, while a second type of hybrid car (hybrid-series) uses the internal combustion engine to actuate an electric generator adapted to generate the energy needed to run the electric propulsion system.

The need has arisen for both these hybrid cars and conventional cars using an internal combustion engine and an automatic transmission to be able to start at a high number of rpm, which today is only possible through the use of a system called 'Launch Control', which allows the engine rpm to be raised while the vehicle is stationary so as to have the maximum power dischargeable to the ground available when the traction is engaged.

This function is currently achieved in certain car models by pressing a special button on the vehicle in conjunction with holding down the brake pedal of the vehicle (with the left foot, as the right one is engaged on the accelerator); as soon as the driver takes pressure off the brake pedal, the engine, which is at a high number of rpm, discharges all its power to the transmission.

However, this method is extremely uncomfortable for the driver, as using the left foot to press the brake pedal feels unnatural.

Moreover, a vehicle with a control system having the features of the preamble of the appended claim 1 is known for example from EP2514950A1 and WO2014/048947A.

The aim of this invention is therefore to allow starting vehicles, in particular cars, at a high number of rpm, which is similar to the "Launch Control" system but without the combined use of the special activation button and pressure on the brake pedal.

Another aim of this invention is to allow the driver to enjoy acoustic sensations and driving dynamics comparable to those of a conventional car with a combustion engine.

These and other aims are achieved by a vehicle adapted to perform starts at a high number of rpm, according to appended claim 1; further features and technical details of the system are described in the dependent claims.

Advantageously, in order to start at a high number of rpm, the invention provides a single control represented by a dedicated pedal similar in position to the clutch pedal used in conventional transmission systems.

This invention will now be described by way of non-limiting example according to its preferred embodiments, with the aid of the attached figures, wherein:
- Figure 1 is a block diagram of a vehicle, in particular a car, with a combustion engine and automatic transmission, according to this invention;
- Figure 2 is a block diagram of a vehicle, in particular a car, with a hybrid engine and automatic transmission, according to this invention.

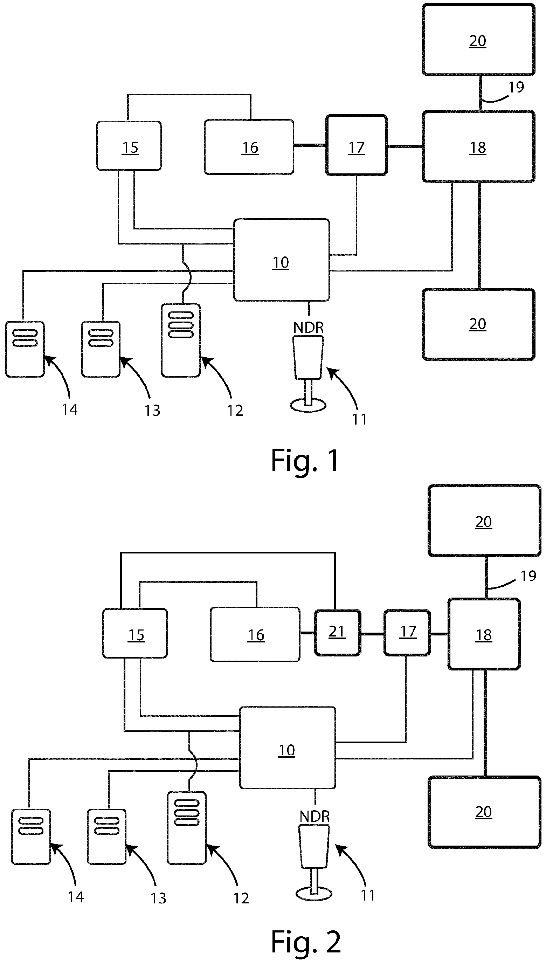

With particular reference to Figure 1, which refers to a first embodiment of a vehicle with a control system according to this invention the system comprises a control unit 10 of the automatic transmission of the vehicle, to which the lever 11 of the automatic transmission ((engageable in the various positions N (Neutral), D (Drive), R (Reverse Gear)) and the accelerator pedal 12 and the brake pedal 13 of the vehicle, are connected.

According to this invention, an additional pedal 14, positioned similarly to the clutch pedal used in conventional transmission systems and connected to the control unit 10, is used so that pressure on the pedal 14 causes the engine rpm to be raised, and the subsequent release of the same pedal 14 causes the full power to be discharged to the vehicle transmission ("Launch Control" operation).

The control unit 10 of the automatic transmission is also connected to a control unit 15 of the internal combustion engine 16 of the vehicle, as well as to an electronic control unit 17, which carries out the above-mentioned functions of the "Launch Control", and to an activation box 18 of the automatic transmission, complete with differential, located on each axle 19 for transmitting the motion to the driving wheels 20 of the vehicle.

The internal combustion engine 16 therefore transfers the motion to the wheels 20 of the vehicle following and based on the commands provided by the electronic control unit 17 and via the activation box 18 of the automatic transmission equipped with the related differential.

According to an alternative embodiment of this invention (shown in detail in Figure 2), the system is applicable to vehicles, in particular cars, with a hybrid engine, and has the same features and elements as the system in Figure 1, except for the presence of one or more electric motors 21 (of the polyphase or permanent magnet synchronous motor type or the like), which are connected to the internal combustion engine 16, the control unit 15 and the electronic control unit 17.

Again here, the control unit 10 of the automatic transmission is connected to a control unit 15 of the internal combustion engine 16 of the vehicle and of the electric motors 21, as well as to the electronic control unit 17, which performs the above-mentioned functions of the "Launch Control" by means of the operation of the pedal 14.

The control unit 10 of the automatic transmission is also connected to the activation box 18 of the automatic transmission, complete with differential, located on the electric axle 19 for transmitting motion to the wheels 20 of the vehicle, so that the internal combustion engine 16 and/or the electric motors 21 transfer motion to the wheels 20 via the differential contained in the box 18.

The electronic control unit 17 thus allows the driver of the vehicle to be able to use a "Launch Control" type system simply by operating the pedal 14, which is positioned to the side of the brake pedal 13 and which simulates the clutch pedal of conventional transmission systems; in this way, it is possible to use the "Launch Control" type system without the combined use of an activation button and pressure on the brake pedal of the vehicle, rather simply by pressing and/or releasing the pedal 14 with the left foot in a natural manner.

In particular, the electronic control unit 17, actuated by the aforesaid pedal 14, via the control unit 10 of the automatic transmission 11, electronically controls the speed of the internal combustion engine 16 by first raising the engine rpm and keeping the vehicle stationary when the pedal 14 is pressed, until the pedal 14 is released, when the control unit 17 gives the command to the engine 16 to discharge all its power to the transmission. The control unit 17 thus acts as an 'electronic clutch', enabling a vehicle without a mechanical clutch (whether with a combustion engine with an automatic transmission or a hybrid engine with an automatic transmission) to start at a high number of rpm.

The features of the control system for vehicles, in particular cars, the object of the invention clearly emerge from the preceding description, as do the advantages thereof.

In particular, these benefits relate to:
- the driver feeling the vehicle in acoustic and emotional terms when the vehicle is started, even when using vehicles with a combustion engine with automatic transmission or hybrid vehicles with an automatic transmission;
- maximisation of the dynamic performance during acceleration when starting the vehicle;
- obtaining starts with a high number of rpm similar to the "Launch Control" system, even with vehicles with a combustion engine or hybrids with an automatic transmission, without the combined use of an activation button and pressure on the brake pedal;
- control system obtained by the simple actuation of a pedal similar to the clutch pedal used in conventional transmission systems;
- use of the driver's left foot to activate the control system by pressing the clutch pedal instead of pressing the brake pedal (more unnatural movement);
- greater safety in the use of the 'Launch Control' system compared to the systems currently in use, as the use of the so-called electronic clutch pedal makes activation of the system easier for the driver to control than the use of buttons combined with other less 'natural' controls.

## Claims

1. Vehicle, in particular a motor vehicle, wherein said vehicle includes a control system, an internal combustion engine (16), an automatic transmission with a lever (11) which can be engaged in various parking and/or driving positions, a first acceleration pedal (12) of the vehicle, a second brake pedal (13) of the vehicle placed laterally to said first pedal (12), a third pedal (14) placed laterally with respect to said second brake pedal (13), a first control unit (10) of said automatic transmission of the vehicle to which said lever (11) of the automatic transmission and said first and second pedals (12, 13) are connected, said first control unit (10) being also connected to a second control unit (15) of said internal combustion engine (16), **characterized in that** said first control unit (10) is also connected to an electronic control unit (17) placed between said internal combustion engine (16) and an activation box (18) of the automatic transmission, which is positioned on one or more axles (19) for transmitting motion to the wheels (20) of the vehicle, said electronic control unit (17) being configured so as to raise, in a first phase, the rpm of said internal combustion engine (16) by keeping the vehicle stationary and, in a second phase, to discharge power to said one or more drive axles (19), said first and second phases being carried out, respectively, by the driver of the vehicle pressing and releasing said third pedal (14) of said vehicle, said third pedal (14) being connected to said first control unit (10).

2. The vehicle according to claim 1, **characterized in that** one or more electric motors (21) are connected to said internal combustion engine (16), said second control unit (15) and said electronic control unit (17).

3. The vehicle according to claim 2, **characterized in that** said electric motors (21) are poly-phase induction motors or permanent magnet synchronous motors or the like.

4. The vehicle according to at least one of the preceding claims, **characterized in that** said third pedal (14) of the vehicle is positioned to the left of said second brake pedal (13) of the vehicle and simulates the clutch pedal of conventional transmission systems.

5. The vehicle according to at least one of the preceding claims, **characterized in that** said third pedal (14) is intended to be operated by the driver of the vehicle with his/her left foot.

6. The vehicle according to at least one of the preceding claims, **characterized in that** said electronic control unit (17) is configured to start the vehicle at a high number of rpm.

## Patentansprüche

1. Fahrzeug, insbesondere ein Kraftfahrzeug, das Fahrzeug beinhaltet ein Steuersystem, einen Verbrennungsmotor (16), ein Automatikgetriebe mit einem Hebel (11), der in verschiedenen Park- und/oder Fahrpositionen eingelegt werden kann, ein erstes Beschleunigungspedal (12) des Fahrzeugs, ein zweites Bremspedal (13) des Fahrzeugs, das seitlich zu dem ersten Pedal (12) angeordnet ist, ein drittes Pedal (14), das seitlich in Bezug auf das zweite Bremspedal (13) angeordnet ist, eine erste Steuereinheit (10) des Automatikgetriebes des Fahrzeugs, mit der der Hebel (11) des Automatikgetriebes und das erste und zweite Pedal (12, 13) verbunden sind, wobei die erste Steuereinheit (10) auch mit einer zweiten Steuereinheit (15) des Verbrennungsmotors (16) verbunden ist, **dadurch gekennzeichnet, dass** die erste Steuereinheit (10) auch mit einer elektronischen Steuereinheit (17) verbunden ist, die zwischen dem Verbrennungsmotor (16) und einer Aktivierungs box (18) des Automatikgetriebes angeordnet ist, die an einer oder mehreren Achsen (19) zur Übertragung von Bewegung auf die Räder (20) des Fahrzeugs angeordnet ist, wobei die elektronische Steuereinheit (17) so konfiguriert ist, dass in einer ersten Phase die Drehzahl des Verbrennungsmotors (16) erhöht wird, indem das Fahrzeug im Stillstand gehalten wird, und in einer zweiten Phase Leistung an die eine oder die mehreren Antriebsachsen (19) abgegeben wird, wobei die erste und die zweite Phase jeweils dadurch ausgeführt werden, dass der Fahrer des Fahrzeugs das dritte Pedal (14) des Fahrzeugs betätigt und loslässt, wobei das dritte Pedal (14) mit der ersten Steuereinheit (10) verbunden ist.

2. Fahrzeug nach Anspruch 1, **dadurch gekennzeichnet, dass** ein oder mehrere Elektromotoren (21) mit dem Verbrennungsmotor (16), dem zweiten Steuergerät (15) und dem elektronischen Steuergerät (17) verbunden sind.

3. Fahrzeug nach Anspruch 2, **dadurch gekennzeichnet, dass** die Elektromotoren (21) Mehrphasen-Induktionsmotoren oder Permanentmagnet-Synchronmotoren oder dergleichen sind.

4. Fahrzeug nach mindestens einem der vorhergehenden Ansprüche, **dadurch gekennzeichnet, dass** das dritte Pedal (14) des Fahrzeugs links von dem zweiten Bremspedal (13) des Fahrzeugs angeordnet ist und das Kupplung- spedal herkömmlicher Getriebesysteme simuliert.

5. Fahrzeug nach mindestens einem der vorhergehenden Ansprüche, **dadurch gekennzeichnet, dass** das dritte Pedal (14) dazu bestimmt ist, vom Fahrer des Fahrzeugs mit seinem linken Fuß betätigt zu werden.

6. Fahrzeug nach mindestens einem der vorhergehenden Ansprüche, **dadurch gekennzeichnet, dass** die elektronische Steuereinheit (17) so konfiguriert ist, dass sie das Fahrzeug mit einer hohen Drehzahl startet.

## Revendications

1. Un véhicule, en particulier un véhicule à moteur, où ledit véhicule inclut un système de commande, un moteur à combustion interne (16), une transmission automatique avec un levier (11) qui peut être engagé dans diverses positions de parking ou de conduite, une première pédale d'accélération (12) du véhicule, une seconde pédale de frein (13) du véhicule placé latéralement à ladite première pédale (12), une troisième pédale (14) placée latéralement en fonction de ladite seconde pédale de frein (13), une première unité de contrôle (10) de ladite transmission automatique du véhicule sur laquelle ledit levier (11) de la transmission automatique et lesdites premières et secondes pédales (12, 13) sont reliées, ladite première unité de contrôle (10) étant aussi connectée à une seconde unité de contrôle (15) dudit moteur de combustion interne (16), **caractérisée par le fait que** ladite première unité de contrôle (10) est aussi reliée à une unité de contrôle électronique (17) placée entre ledit moteur de combustion interne (16) et un boîtier d'activation (18) de la transmission automatique, qui est positionnée sur un ou plusieurs axes (19) pour transmettre le mouvement aux roues (20) du véhicule, ladite unité de commande électronique (17) étant configurée de manière à élever, dans une première phase, le régime dudit moteur à combustion interne (16) en gardant le véhicule à l'arrêt et, dans une seconde phase, pour décharger la puissance d'un ou plusieurs essieux moteurs (19), lesdites premières et secondes phases étant effectuées, respectivement, par le conducteur du véhicule en pressant et libérant ladite troisième pédale (14) dudit véhicule, ladite troisième pédale (14) étant reliée à ladite première unité de contrôle (10).

2. Le véhicule selon la revendication 1, **caractérisée par le fait qu'**un ou plusieurs moteurs électriques (21) sont reliés au moteur à combustion interne (16), ladite seconde unité de contrôle (15) et ladite seconde unité électronique de contrôle (17).

3. Le véhicule selon la revendication 2 est **caractérisé par le fait que** les moteurs électriques (21) sont des moteurs à induction polychasés ou des moteurs synchrones à aimants permanents ou des éléments semblables.

4. Le véhicule selon au moins l'une quelconque des revendications précédentes, **caractérisé par le fait que** la troisième pédale (14) du véhicule est positionnée sur la gauche de ladite seconde pédale de frein (13) du véhicule et stimule la pédale d'embrayage des systèmes de transmission conventionnels.

5. Le véhicule selon au moins une des revendications précédentes est **caractérisé par le fait que** la troisième pédale (14) est prévue pour être actionnée par le conducteur du véhicule avec son pied gauche.

6. Le véhicule selon au moins une des revendications précédentes est **caractérisé par le fait que** ladite unité de contrôle électronique (17) est configurée pour démarrer le véhicule à un numéro élevé de tours/minutes.
